# EUROPEAN PATENT SPECIFICATION

(11) **EP 4 015 090 B1**
(45) Date of publication and mention of the grant of the patent: **18.09.2024**
(21) Application number: 21213911.7
(22) Date of filing: 10.12.2021
(51) Int. Cl.: B05B 12/00

(54) **APPLICATION SYSTEM, CONTROL DEVICE, CONTROL METHOD, AND PROGRAM**
ANWENDUNGSSYSTEM, STEUERVORRICHTUNG, STEUERVERFAHREN UND PROGRAMM
SYSTÈME D'APPLICATION, DISPOSITIF DE COMMANDE, PROCÉDÉ DE COMMANDE ET PROGRAMME

(30) Priority: 17.12.2020 JP 2020209445
(43) Date of publication of application: 22.06.2022
(73) Proprietor: Kabushiki Kaisha Yaskawa Denki, Kitakyushu-shi, Fukuoka 806-0004 (JP)
(72) Inventor: KIKUCHI, Kenta, Kitakyushu-shi, Fukuoka 806-0004 (JP); ITO, Tsuyoshi, Kitakyushu-shi, Fukuoka 806-0004 (JP)
(74) Representative: BRP Renaud & Partner mbB Rechtsanwälte Patentanwälte Steuerberater

(56) References cited:
- EP-A1- 3 241 616
- JP-B1- 6 733 830
- US-A1- 2019 041 192
- US-A1- 2019 201 929
- US-B2- 10 822 814

## Description

### Technical Field

The present disclosure relates to an application system, a control device, a control method, and a program.

### Background Art

An application device for applying a viscous material to an application target is described in Patent Document 1. The application device includes a nozzle device that discharges a viscous material from a nozzle onto the application target, and a moving means that moves the nozzle device relative to the application target. The moving means is an articulated robot configured to move the nozzle device relative to the application target via the operation of each joint.

### Citation List

### Patent Literature

Patent Document 1: WO2013140814A1 relates to a coating apparatus for applying a viscous material to an object to be coated. Patent Document 2: EP3241616A1 relates to a system for adjusting a flow rate of a material. Patent Document 3: US2019/0041192A1 relates to a system for adaptive control of a thickness of a coating applied on a component. Patent Document 4: US10822814B2 relates to an automated drywalling system. Patent Document 5: US2019/0201929A1 relates to a board coating device.

### Summary of Invention

### Technical Problem

The present disclosure provides an application system, a control device, a control method, and a program useful for quality stabilization.

### Solution to Problem

An application system according to claim 1, a control method according to claim 11 and a program according to claim 12.

### Advantageous Effects of Invention

According to the present disclosure, an application system, a control device, a control method, and a program useful for quality stabilization are provided.

### Brief Description of Drawings

FIG. 1 is a schematic diagram illustrating an example of a configuration of an application system.
FIG. 2 is a schematic diagram illustrating an example of a configuration of an application device.
FIG. 3 is a block diagram illustrating an example of a functional configuration of a control device.
FIGS. 4(a) and 4(b) are schematic diagrams illustrating examples of a coating material applied on a workpiece.
FIG. 5 is a block diagram illustrating an example of the hardware configuration of a control device.
FIG. 6 is a flowchart illustrating an example of a control method of an application system.

### Description of Embodiments

An embodiment will be described below with reference to the drawings. In the description, elements which are the same or have the same function are given the same reference signs, and redundant descriptions thereof are omitted.

### Application System

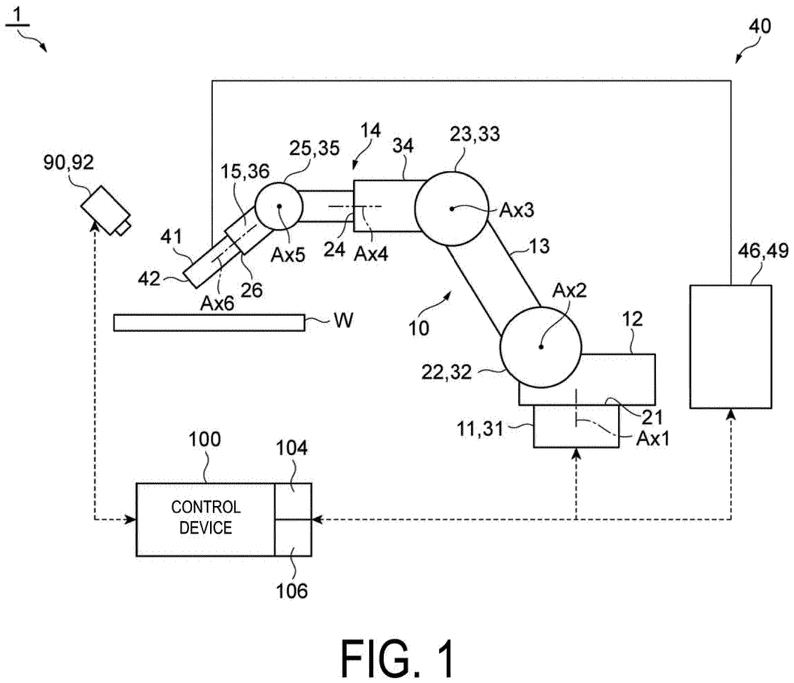

An application system 1 illustrated in FIG. 1 is a system for automatically performing at least a part of an application operation in which a coating material is applied to an application object (hereinafter, referred to as a "workpiece W"). The workpiece W is, for example, part of the body of an automobile. Examples of the workpiece W include a floor panel, a roof panel, and a door panel of an automobile. The coating material applied to the workpiece W is, for example, a sealant or a vibration damping material that dampens vibration (coating material for soundproofing). The vibration damping material may include a material (resin) having viscosity and elasticity. For example, the vibration damping material includes a material having a viscosity at which, at room temperature, the material can maintain its application shape without dripping until the material solidifies. The application system 1 includes an articulated robot 10, an application device 40, and a control device 100.

### Articulated Robot

The articulated robot 10 is, for example, a 6-axis vertical articulated robot including a base portion 11, a swivel portion 12, a first arm 13, a second arm 14, a wrist portion 15, and actuators 31, 32, 33, 34, 35, 36.

The base portion 11 is fixed to a floor or a pedestal having a linear motion mechanism, for example. The swivel portion 12 is provided on the base portion 11 and is rotatable about a vertical axis Ax1. That is, the articulated robot 10 includes a joint 21 that allows the swivel portion 12 to rotate about the axis Ax1.

The first arm 13 extends from the swivel portion 12 and is rotatable about an axis Ax2 that intersects (for example, orthogonally) the axis Ax1. That is, the articulated robot 10 includes a joint 22 that allows the first arm 13 to rotate about the axis Ax2. Note that "intersect" used herein includes in its meaning a twisted relationship such as in a so-called three-dimensional intersection. The same applies hereinafter.

The second arm 14 extends from a distal end portion of the first arm 13 and is rotatable about an axis Ax3 that intersects (for example, orthogonally) the axis Ax1. That is, the articulated robot 10 includes a joint 23 that allows the second arm 14 to rotate about the axis Ax3. The axis Ax3 may be parallel with the axis Ax2.

A distal end portion of the second arm 14 is rotatable about an axis Ax4 along the extension direction of the second arm 14, the axis Ax4 intersecting (for example, orthogonally) the axis Ax3. That is, the articulated robot 10 includes a joint 24 that allows the distal end portion of the second arm 14 to rotate about the axis Ax4.

The wrist portion 15 extends from the distal end portion of the second arm 14 and is rotatable about an axis Ax5 that intersects (for example, orthogonally) the axis Ax4. That is, the articulated robot 10 includes a joint 25 that allows the wrist portion 15 to rotate about the axis Ax5.

The operation target member is provided at the distal end portion of the wrist portion 15, and the member is rotatable about an axis Ax6 along the extension direction of the wrist portion 15, the axis Ax6 intersecting (for example, orthogonally) the axis Ax5. That is, the articulated robot 10 includes a joint 26 that allows the operation target member to rotate about the axis Ax6. The operation target member is a discharge unit 41 (described later) that functions as a gun for discharging the coating material.

The actuators 31, 32, 33, 34, 35, 36 drive the joints 21, 22, 23, 24, 25, 26, respectively. For example, the actuator 31 rotates the swivel portion 12 about the axis Ax1, the actuator 32 rotates the first arm 13 about the axis Ax2, and the actuator 33 rotates the second arm 14 about the axis Ax3. The actuator 34 rotates the distal end portion of the second arm 14 about the axis Ax4, the actuator 35 rotates the wrist portion 15 about the axis Ax5, and the actuator 36 rotates the operation target member about the axis Ax6.

Note that the articulated robot 10 can be configured in a discretionary manner as long as the position and the orientation of the operation target member can be changed within the desired range. For example, the articulated robot 10 may be a 7-axis vertical articulated robot, which is the 6-axis vertical articulated robot described above with a redundant axis.

### Application Device

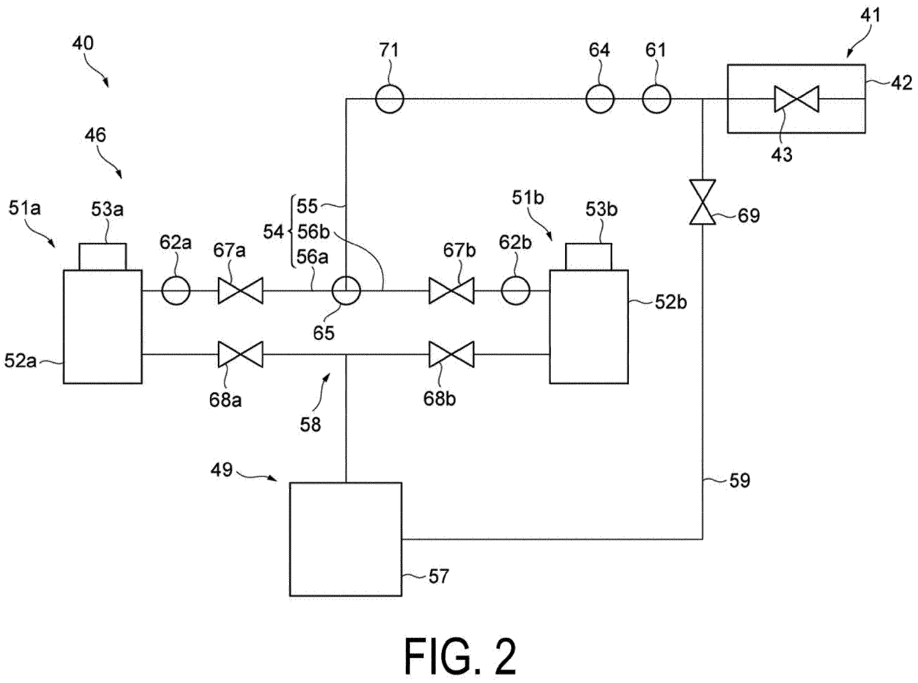

The application device 40 is a device that cooperates with the articulated robot 10 to apply the coating material to the workpiece W. As illustrated in FIG. 2, the application device 40 includes the discharge unit 41, a pressure feeding unit 46, and a supply unit 49.

The discharge unit 41 discharges the coating material. The discharge unit 41 is provided at the distal end portion of the wrist portion 15 of the articulated robot 10. In other words, the position and the orientation of the discharge unit 41 are changed by the operation of the articulated robot 10. An outlet may be provided in an end surface 42 of the discharge unit 41. When the position and the orientation of the discharge unit 41 are changed by the articulated robot 10, the discharge position and the discharge direction of the coating material discharged from the outlet change.

The discharge unit 41 includes a discharge valve 43 (open/close valve). The discharge valve 43 switches a state of the discharge unit 41, by an open/close operation, between a state in which the coating material is discharged from the discharge unit 41 (outlet) and a state in which the coating material is not discharged from the discharge unit 41. The discharge valve 43 is, for example, an air operated valve, and an air tube for feeding air for the open/close operation is connected to the discharge valve 43. The discharge valve 43 may have a function of outputting a signal indicating its open/closed state. Note that the discharge unit 41 may not include the discharge valve 43. In this case, the open/close valve (for example, delivery valve 67a or 67b described below) located upstream of the discharge unit 41 may switch a state of the discharge unit 41 between a state in which the coating material is discharged from the discharge unit 41 and a state in which the coating material is not discharged from the discharge unit 41.

The pressure feeding unit 46 pressure-feeds the coating material to the discharge unit 41. The pressure feeding unit 46 includes pumps 51a, 51b, a liquid feeding pipe 54, and the delivery valves 67a, 67b.

The pump 51a and the pump 51b have a similar configuration and a similar function. The pumps 51a, 51b each receive the coating material via a suction operation and deliver (pressure-feed) the coating material to be discharged to the workpiece W to the discharge unit 41. The pumps 51a, 51b are, for example, servo booster pumps and include a storage portion 52a, 52b and an actuator 53a, 53b, respectively. The storage portions 52a, 52b each contain a coating material to be discharged. The actuators 53a, 53b each apply pressure to the coating material contained in the storage portions 52a, 52b via operation of pistons and deliver the coating material to the discharge unit 41.

The liquid feeding pipe 54 guides the coating material from the pumps 51a, 51b to the discharge unit 41. The upstream end portion of the liquid feeding pipe 54 is connected to both the pump 51a and the pump 51b, and the downstream end portion of the liquid feeding pipe 54 is connected to the discharge unit 41. In other words, the pumps 51a, 51b both supply the coating material to the discharge unit 41 via the liquid feeding pipe 54. The liquid feeding pipe 54 includes a delivery pipe 55 and branch pipes 56a, 56b. The delivery pipe 55 is connected to the discharge unit 41, and the branch pipes 56a, 56b branch off from the delivery pipe 55 and are connected to the pumps 51a, 51b, respectively.

The delivery valve 67a opens and closes the path between the pump 51a and the discharge unit 41. The delivery valve 67a is provided in the branch pipe 56a. The delivery valve 67b opens and closes the path between the pump 51b and the discharge unit 41. The delivery valve 67b is provided in the branch pipe 56b. The delivery valves 67a, 67b are air operated valves, for example, and air tubes for feeding air for the open/close operation are connected to the delivery valves 67a, 67b, respectively. The delivery valves 67a, 67b may each have a function of outputting a signal indicating its open/closed state.

The supply unit 49 supplies the coating material to the pressure feeding unit 46. In other words, the pumps 51a, 51b of the pressure feeding unit 46 deliver the coating material supplied (suctioned) from the supply unit 49 to the discharge unit 41. The supply unit 49 includes a liquid source 57, a supply pipe 58, suction valves 68a, 68b, a return pipe 59, and a circulation valve 69.

The liquid source 57 is the supply source of the coating material. The supply pipe 58 connects the liquid source 57 and both the pumps 51a, 51b. Specifically, the supply pipe 58 includes a delivery pipe with one end connected to the liquid source 57 and two branch pipes that branch from the other end of the delivery pipe and respectively connect to the pumps 51a, 51b. The suction valve 68a opens and closes the path between the liquid source 57 and the pump 51a. The suction valve 68b opens and closes the path between the liquid source 57 and the pump 51b. The suction valves 68a, 68b are air operated valves, for example, and air tubes for feeding air for the open/close operation are connected to the suction valves 68a, 68b, respectively. The suction valves 68a, 68b may each have a function of outputting a signal indicating its open/closed state.

The return pipe 59 connects the delivery pipe 55 of the liquid feeding pipe 54 and the liquid source 57. Accordingly, the coating material fed from the pumps 51a, 51b can be circulated back to the liquid source 57 without being sent to the discharge unit 41. The circulation valve 69 is provided in the return pipe 59 and switches a state of the flow path in the return pipe 59 from a closed state in which the flow path is closed to an open state when the coating material is circulated back. The circulation valve 69 is an air operated valve, for example. The circulation valve 69 may have a function of outputting a signal indicating its open/closed state.

The application device 40 includes pressure sensors 61, 62a, 62b. The pressure sensors 61, 62a, 62b each measure the pressure of the coating material in the application device 40 (hereinafter, simply referred to as "pressure in the application device 40") as an operating state of the application device 40. The pressure sensors 61, 62a, 62b measure the pressure at a plurality of sections in the application device 40. The plurality of sections include at least two sections different in terms of position in the direction aligned with the liquid feeding pipe 54 (the branch pipe 56a and the delivery pipe 55). Note that the direction aligned with the liquid feeding pipe 54 corresponds to the direction in which the liquid feeding pipe 54 extends and corresponds to the direction in which the coating material flows in the liquid feeding pipe 54.

For example, the pressure sensor 61 is provided at a position near the discharge unit 41 in the liquid feeding pipe 54 (the delivery pipe 55). The pressure sensor 62a is provided, for example, at a position near the pump 51a (between the pump 51a and the delivery valve 67a) in the liquid feeding pipe 54. The pressure sensor 62b is provided, for example, at a position near the pump 51b (between the pump 51b and the delivery valve 67b) in the liquid feeding pipe 54.

The application device 40 includes temperature sensors 64, 65. The temperature sensors 64, 65 each measure the temperature of the coating material in the application device 40 (hereinafter, simply referred to as "temperature in the application device 40") as an operating state of the application device 40. The temperature sensors 64, 65 measure the temperature at a plurality of sections in the application device 40. The plurality of sections include at least two sections different in terms of position in the direction aligned with the liquid feeding pipe 54. For example, the temperature sensor 64 is provided at a position near the discharge unit 41 in the liquid feeding pipe 54 (the delivery pipe 55). The temperature sensor 65 is provided at a position closer to the pumps 51a, 51b than the discharge unit 41 in the liquid feeding pipe 54.

The application device 40 includes a flow rate sensor 71. The flow rate sensor 71 is provided, for example, in the delivery pipe 55 of the liquid feeding pipe 54. The flow rate sensor 71 measures the flow rate of the coating material in the delivery pipe 55 as an operating state of the application device 40. The flow rate sensor 71 measures the flow rate per unit time of the coating material in the delivery pipe 55 or the integrated flow rate of the coating material in the delivery pipe 55.

Returning to FIG. 1, the application system 1 includes an application state detection unit 90. The application state detection unit 90 detects the state of the coating already applied to the workpiece W. The application state detection unit 90 includes a camera 92, for example. The camera 92 can capture an image of the region of the workpiece W where the coating material is applied. The camera 92 outputs, to the control device 100, image data obtained by capturing an image of the workpiece W on which the coating has been applied. The camera 92 may be fixed in a predetermined position, and the workpiece W may be imaged when the workpiece W is positioned within the field of view of the camera 92.

### Control Device

The control device 100 controls the articulated robot 10 and the application device 40. The control device 100 at least executes calculation of a control target value for controlling the application device 40 and the articulated robot 10 on the basis of information indicating the operating state of at least one of the application device 40 or the articulated robot 10 (hereinafter, referred to as "operating state information") and information indicating the target quality of the application of the coating material to the workpiece W (hereinafter, referred to as "target quality information") and executes control of the application device 40 and the articulated robot 10 in accordance with the calculated control target value.

The application system 1 may include an input device 104 and an output device 106 connected to the control device 100. The input device 104 is a device for inputting information to the control device 100. More specifically, the input device 104 inputs, to the control device 100, input information indicating an instruction from an operator. The input device 104 can be any device as long as desired information can be input to the control device 100. Specific examples thereof include a keyboard, an operation panel, and a mouse.

The output device 106 is a device for sending a notification of information output from the control device 100. The output device 106 is, for example, a monitor that allows the operator to confirm the information from the control device 100. The monitor can be any device as long as information can be displayed on a screen. A specific example thereof is a liquid crystal panel.

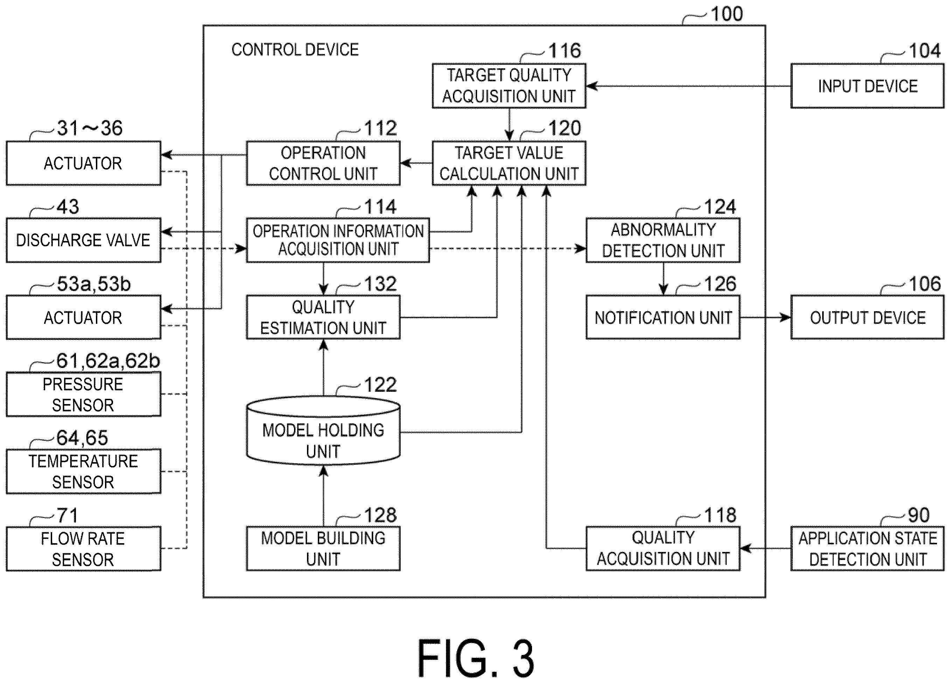

As a functional configuration (hereinafter, referred to as "functional modules") of the control device 100, the control device 100 includes, for example, an operation control unit 112, an operation information acquisition unit 114, a target quality acquisition unit 116, a quality acquisition unit 118, a target value calculation unit 120, a model holding unit 122, a model building unit 128, an abnormality detection unit 124, and a notification unit 126, as illustrated in FIG. 3. The processing executed by these functional modules corresponds to the processing executed by the control device 100.

The operation control unit 112 controls the application device 40 and the articulated robot 10 according to a control target value for controlling the application device 40 and the articulated robot 10. The operation control unit 112 controls the application device 40 so that the coating material is discharged from the discharge unit 41 according to a control target value relating to the operation of the application device 40. The operation control unit 112 controls the articulated robot 10 so that the coating material from the discharge unit 41 is applied to the workpiece W according to a control target value relating to the operation of the articulated robot 10.

The operation control unit 112 may change the position and the orientation of the discharge unit 41 so that the position where the coating material discharged by the discharge unit 41 adheres to the workpiece W moves along a predetermined path. For example, the operation control unit 112 calculates, using inverse kinematics, target angles (command values) for the actuators 31 to 36 on the basis of the target position and the target orientation of the discharge unit 41, and controls the actuators 31 to 36 so as to follow the target angles.

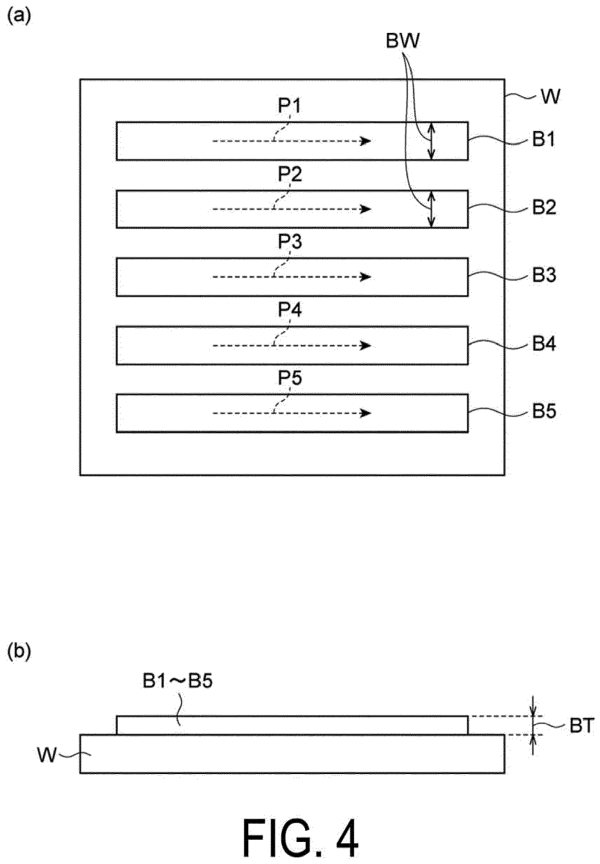

As illustrated in FIG. 4, a plurality of application paths (paths P1 to P5) indicating paths of the coating adhesion positions are defined on the workpiece W. The operation control unit 112 controls the application device 40 so as to discharge the coating material from the discharge unit 41 while the position and the orientation of the discharge unit 41 is made to follow the target position and the target orientation according to each application path. In this manner, beads B1 to B5 (a plurality of beads) are formed on the workpiece W along the plurality of application paths.

The operation control unit 112 may control the application device 40 and the articulated robot 10 so that an application width BW and a thickness BT of the beads are substantially constant in each of the beads B1 to B5. The application width BW is, for example, the length (width) of the bead in a direction that is orthogonal to the application path and follows the surface of the workpiece W. The thickness BT is, for example, a length (thickness) of the bead in a direction orthogonal to both the application path and the surface of the workpiece W. The operation control unit 112 may control at least one of the pumps 51a, 51b so that the coating material is discharged at a substantially constant flow rate, or may control the actuators 31 to 36 so that the movement speed of the discharge unit 41 relative to the workpiece W is substantially constant.

Examples of the control target value relating to the application device 40 include a command value for the rotational speed of the motor included in the actuators 53a, 53b, and the open/close timing of the discharge valve 43 (more specifically, the timing for sending the open/close command to the discharge valve 43). The timing for sending the open/close command to the discharge valve 43 is, during application of the coating material on one application path, the timing at which an open command is sent to the discharge valve 43 and the timing at which a close command is sent to the discharge valve 43.

Examples of the control target value relating to the articulated robot 10 include a command value for the operating speed of the articulated robot 10 and target angles for the actuators 31 to 36 according to the target position and the target orientation for the position and the orientation of the discharge unit 41. Note that a target value for the distance between the workpiece W and the discharge unit 41 (outlet) is defined on the basis of the target position and the target orientation. When the application system 1 begins to run, the control target value may be set to an initial value. The initial value of the control target value may be predetermined on the basis of input information from the operator.

The operation information acquisition unit 114 acquires operating state information indicating the operating state of at least one of the application device 40 or the articulated robot 10. The operation information acquisition unit 114 acquires the operating state information from at least the application device 40 or the articulated robot 10 during the application of the coating material to the workpiece W, for example. The operation information acquisition unit 114 may acquire operating state information including information indicating the operating state of the application device 40 and information indicating the operating state of the articulated robot 10. The operation information acquisition unit 114 acquires information indicating the operating state of the application device 40 from the application device 40 at a predetermined period, for example. The operation information acquisition unit 114 acquires information indicating the operating state of the articulated robot 10 from the articulated robot 10 at a predetermined period, for example.

Examples of the operating state information relating to the application device 40 include information relating to the coating material in the flow path of the delivery pipe 55 connected to the discharge unit 41, information indicating the operating state of the discharge valve 43, and information indicating the operating state of the pumps 51a, 51b that pressure-feed the coating material to the discharge unit 41. The information relating to the coating material in the flow path of the delivery pipe 55 may include information indicating the flow rate of the coating material in the flow path, information indicating the pressure of the coating material in the flow path, and information indicating the temperature of the coating material in the flow path. In one example, the information relating to the coating material in the flow path of the delivery pipe 55 is obtained from the measurement result from the pressure sensors 61, 62a, 62b, the measurement result from the temperature sensors 64, 65, and the measurement result from the flow rate sensor 71.

An example of the information indicating the operating state of the discharge valve 43 includes information indicating the timing from when the discharge valve 43 receives the open/close command to when the open/closed state actually changes, for example. This timing may be calculated on the basis of a signal indicating the open/closed state from the discharge valve 43. An example of information indicating the operating state of the pumps 51a, 51b includes the actual rotational speed of the actuators 53a, 53b included in the pumps 51a, 51b. In one example, the actual rotational speeds of the actuators 53a, 53b are obtained from rotation sensors included in the actuators 53a, 53b, respectively.

An example of the information indicating the operating state of the articulated robot 10 includes information indicating the operating state of the actuators 31 to 36 included in the articulated robot 10, for example. The information indicating the operating state of the actuators 31 to 36 includes information indicating the actual rotational speed and the actual angle of rotation of the actuators 31 to 36. Using the rotational speed and the angle of rotation, the actual position and orientation of the discharge unit 41 (the actual distance between the discharge unit 41 and the workpiece W) and the actual operating speed of the discharge unit 41 can be calculated. In one example, the actual rotational speed and the actual angle of rotation of the actuators 31 to 36 are obtained from a measurement result from a rotation sensor included in each of the actuators 31 to 36. Note that the position, orientation, and operating speed of the discharge unit 41 depends on the operation of the articulated robot 10 and thus indicates the operating state of the articulated robot 10.

The target quality acquisition unit 116 acquires target quality information indicating a target for the application quality of the coating to the workpiece W. The application quality includes, for example, at least the application width of the coating material on the workpiece W or the thickness of the coating material on the workpiece W. The target quality information may include a target value for the application width BW of the coating (bead) on the workpiece W and a target value for the thickness BT of the coating (bead) on the workpiece W (see also FIG. 4).

The quality acquisition unit 118 acquires information indicating performance relating to the application quality of the coating to the workpiece W (hereinafter, referred to as "performance quality information") from the detection result obtained by the application state detection unit 90. For example, the quality acquisition unit 118 may acquire, as performance quality information, at least one of a performance value for the application width BW of the bead already formed on the workpiece W or a performance value for the thickness BT of the bead already formed on the workpiece W.

The quality acquisition unit 118 may acquire the performance value for the application width BW of the bead and the performance value for the thickness BT of the bead from image data obtained by the camera 92 capturing an image of the workpiece W with the coating already applied. The quality acquisition unit 118 may acquire the performance value for the application width BW or the thickness BT at a plurality of sections in a single application path or may acquire the average value of the application width BW and the average value of the thickness BT as performance values in a single bead (application path).

The target value calculation unit 120 calculates a control target value for which the operation control unit 112 has set the conditions of operation for when the application device 40 and the articulated robot 10 are controlled. The initial value of the control target value described above is set, for example, assuming that the surrounding environment or the like is a reference state and, when the coating is actually applied, a difference may occur between the target application quality (for example, the target value for the application width BW) and the actual application quality (for example, the performance value for the application width BW). In this manner, the target value calculation unit 120 calculates the control target value so as to reduce this difference. When the target value calculation unit 120 calculates the control target value, the operation control unit 112 updates the currently set control target value (for example, the initial value) with the control target value calculated by the target value calculation unit 120. Then, the operation control unit 112 controls the application device 40 and the articulated robot 10 according to the updated (calculated) control target value.

The target value calculation unit 120 calculates the control target value on the basis of the operating state information and the target quality information. For example, the target value calculation unit 120 calculates the control target value so that the difference between the target quality information and the performance quality information is reduced on the basis of the operating state information and the target quality information. The target value calculation unit 120 may calculate the control target value on the basis of the operating state information, the target quality information, and the performance quality information (for example, the performance quality information acquired by the quality acquisition unit 118). In one example, the target value calculation unit 120 calculates the control target value using an estimation model configured to output the amount of change of the control target value in response to input of the operating state information and the difference between the target quality information and the performance quality information. The estimation model is held (stored) in the model holding unit 122.

The target value calculation unit 120 may calculate the control target value in a case where a deviation level (hereinafter, referred to as "quality deviation level") between the target quality indicated by the target quality information and the performance quality indicated by the performance quality information exceeds a predetermined level. That is, when the quality deviation level between the target quality and the performance quality exceeds a predetermined level, the control target value may be updated (adjusted). The target value calculation unit 120 may compare the quality deviation level and the predetermined level described above each time the coating material is applied to one application path. The predetermined level is, for example, preset in consideration of the tolerance in the application quality.

One plausible cause for the deviation between target quality and performance quality is a change in the environment (external environment) in which the articulated robot 10 and the application device 40 operate. For example, when the temperature around the area where the articulated robot 10 and the application device 40 are installed changes, the temperature of the coating material in the application device 40 changes from the value (reference value) at the reference state taking into account in the setting of the initial value of the control target value. In this case, the viscosity of the coating material changes, so even if the application device 40 is operated using the same control target value, the adhesion behavior of the coating material discharged from the discharge unit 41 on the workpiece W changes. As a result, the application width BW or the thickness BT of the coating, i.e., the application quality, is affected. The target value calculation unit 120 uses the above-described estimation model to calculate the control target value so that the performance quality obtained is close to the target quality, even when the temperature of the coating material changes.

In addition to the change in the external environment, one plausible cause for the deviation between the target quality and the performance quality is a change (deviation from the reference value) in the actual operation with respect to the control target value. The change in the actual operation of the device with respect to the control target value is detected by comparing the operating state information and the reference value. For example, when the timing from when the discharge valve 43 receives an open command until when the discharge valve 43 actually opens is slower than the reference value, the pressure inside the liquid feeding pipe 54 at the discharge start time (immediately before) increases, and the coating in the bead formed in one application path may be thick at the lead portion. In other words, the delay in the timing affects the application width BW, which is a type of application quality.

The target value calculation unit 120 uses the above-described estimation model to calculate the control target value so that the performance quality obtained is close to the target quality, even when the actual opening timing changes. The reference value may be set to a statistical value of the operating state information instead of the value in the reference state. For example, the reference value for the open/close operation of the discharge valve 43 may be set to the cumulative average value of the times until the discharge valve 43 actually opens.

Another example of a cause for the deviation between the target quality and the performance quality includes the difference between the standard specifications (for example, dimensions) of each device included in the application system 1 taken into account when setting the initial value of the control target value and the specifications (for example, dimensions) of each device actually in operation. For example, the same type of application system 1 may be used in different use environments (may have different installation positions in the factory or be in different factories). In this case, it can be expected that the dimensions of each device (for example, the length of the liquid feeding pipe 54) differ depending on the use environment.

There is a plausible correlation between the performance quality of the coating and the operating state information obtained during the discharge of the coating material to the workpiece W. Accordingly, the target value calculation unit 120 may calculate the control target value in a case where the deviation level between the operating state information acquired by the operation information acquisition unit 114 and the reference value (hereinafter, referred to as "operation deviation level") exceeds a predetermined set level. In a case where the operating state information includes information indicating a plurality of operating states, reference values corresponding to each of the plurality of operating states are set. Then, the target value calculation unit 120 compares, for each of the plurality of operating states, the operation deviation level between the information indicating the operating state and the corresponding reference value and the set level.

The set level is set in advance taking into account, for example, the amount of deviation from a reference value estimated to exceed the tolerance in the application quality. In one example, in a case where the actual opening timing of the discharge valve 43 has deviated, the target value calculation unit 120 may use the estimation model described above to adjust the timing at which the open command is sent to the discharge valve 43 so that the actual opening timing is brought closer to the reference value (so that the deviation level with the reference value is reduced).

The model building unit 128 builds the estimation model used by the target value calculation unit 120 to calculate the control target value. The model building unit 128 builds an estimation model that represents the relationship between the control target value, and the target quality information, the performance quality information, and the operating state information. In the estimation model, the relationship between the control target value itself or the amount of change of the control target value may be represented for the target quality information, the performance quality information, and the operating state information. The model building unit 128 builds, for example, an estimation model that outputs a (recommended value for the) control target value in response to input of the target quality information, the performance quality information, and the operating state information from the accumulated performance data of various pieces of information. Alternatively, the model building unit 128 may build an estimation model that outputs an amount of change of the control target value (a recommended amount of change from the currently set control target value) in response to input of the operating state information and the difference between the target quality information and the performance quality information from the accumulated performance data of various pieces of information. An example of a build of the estimation model will be described below.

The model building unit 128 accumulates operating state information, control target values, and performance quality information based on the operating state information and the control target values. The model building unit 128 changes the control target value within a predetermined range and stores the operating state information and the control target value at the time of the change and the performance quality information in association with each other. At this time, the model building unit 128 may store the amount of change of the control target value and the amount of change of the performance quality information based on the amount of change of the control target value for a single piece of operating state information. In other words, in a case where the articulated robot 10 and the application device 40 are operating in a specific operating state, the model building unit 128 may execute an accumulation process in which the amount of change of the control target value and the amount of change of the performance quality information are associated with one another and stored. The model building unit 128 may iterate the accumulation processing for various pieces of operating state information in which the values for any of the operating states differ.

The model building unit 128 may build the estimation model by machine learning on the basis of the accumulated data obtained by iteration of the accumulation processing and association of the amount of change of the control target value and the amount of change of the performance quality information with one another. The estimation model is configured to represent the relationship between the amount of change of the control target value and the amount of change of the performance quality information and the operating state information. Specifically, when the amount of change of the performance quality information (the difference between the current performance quality and the target quality) and the operating state information (the current operating state information) are input, the estimation model is configured to, on the basis of these input values, output an amount of change of the control target value that reduces the difference between the current performance quality and the target quality.

As an example of the estimation model, a neural network may be used in which the amount of change of the performance quality information and the operating state information are input vectors, and the amount of change of the control target value is an output vector. The neural network includes an input layer, one or more intermediate layers, and an output layer. The input layer outputs the input vector directly to the next intermediate layer. The intermediate layer converts input from one previous layer using an activation function and outputs the result to the next layer. The output layer converts the input from the intermediate layer furthest from the input layer using an activation function and outputs the conversion result.

The abnormality detection unit 124 detects an abnormality in the operation of the application device 40 or the articulated robot 10 on the basis of the result of comparing the operation deviation level described above between the operating state information and the reference value and a predetermined operation tolerance level (tolerance level). The abnormality detection unit 124 may determine that an abnormality has occurred in the application device 40 or the articulated robot 10 in a case where the operation deviation level exceeds the operation tolerance level. The tolerance level is preset to a value greater than the set level described above. The tolerance level is set, for example, to a level for determining that the deviation between the operating state and the reference value is to a degree that cannot be adjusted by correction of the control target value.

In a case where the operating state information includes information indicating a plurality of operating states, the abnormality detection unit 124 may detect an abnormality for each one of the plurality of operating states included in the operating state information. The abnormality detection unit 124 may determine whether there is an abnormality at a predetermined period, or may determine whether there is an abnormality each time a bead is formed on an application path. The abnormality detection unit 124 determines that an abnormality has occurred in the application device 40 in a case where the operation deviation level between the operating state information and the reference value relating to the application device 40 exceeds the tolerance level. The abnormality detection unit 124 determines that an abnormality has occurred in the articulated robot 10 in a case where the operation deviation level between the operating state information and the reference value relating to the articulated robot 10 exceeds the tolerance level.

The notification unit 126 sends a notification of the detection result obtained by the abnormality detection unit 124. For example, in a case where the abnormality detection unit 124 detects an abnormality, the notification unit 126 outputs a signal indicating that an abnormality has occurred to the output device 106. The notification unit 126 may further output a signal indicating which one of the application device 40 and the articulated robot 10 an abnormality occurred in to the output device 106. Upon receiving a signal indicating that an abnormality has occurred, the output device 106 may display information according to the signal.

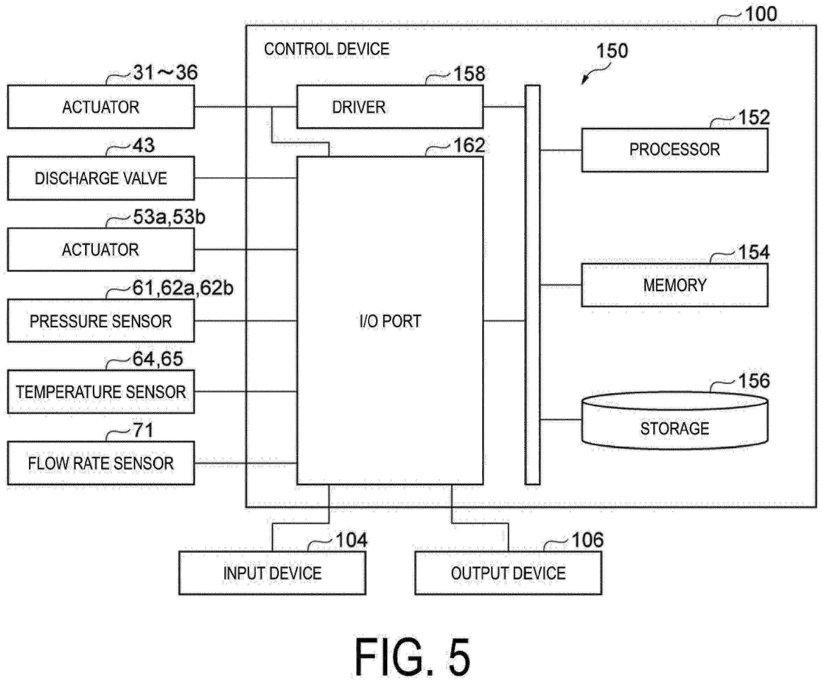

FIG. 5 is a block diagram illustrating an example of the hardware configuration of the control device 100. As illustrated in FIG. 5, the control device 100 includes a circuit 150. The circuit 150 includes one or more processors 152, a memory 154, a storage 156, a driver (driver circuit) 158, and an I/O port 162. The storage 156 includes a computer-readable storage medium such as a non-volatile semiconductor memory.

The storage 156 stores a program for causing the control device 100 to execute calculation of a control target value on the basis of the operating state information indicating the operating state of at least one of the application device 40 or the articulated robot 10 and the target quality information indicating the target of the application quality of the coating to the workpiece W, and to execute control of the application device 40 and the articulated robot 10 in accordance with the calculated control target value. For example, the storage 156 stores a program that configures each of the functional modules described above in the control device 100.

The memory 154 temporarily stores programs loaded from the storage medium of the storage 156 and calculation results from the processor 152. The processor 152 implements each functional module of the control device 100 by executing the programs described above in cooperation with the memory 154. The driver 158 outputs drive power to the actuators 31 to 36 of the articulated robot 10 in accordance with commands from the processor 152. At the I/O port 162, information is transferred between the actuators 31 to 36, the discharge valve 43, the actuators 53a, 53b, the pressure sensors 61, 62a, 62b, the temperature sensors 64, 65, the flow rate sensor 71, the input device 104, and the output device 106, in accordance with commands from the processor 152.

Note that in the circuit 150, each function is not limited to being implemented by a program. For example, in the circuit 150, at least one function may be implemented by a dedicated logic circuit or an application specific integrated circuit (ASIC) in which logic circuits are integrated.

### Control Method

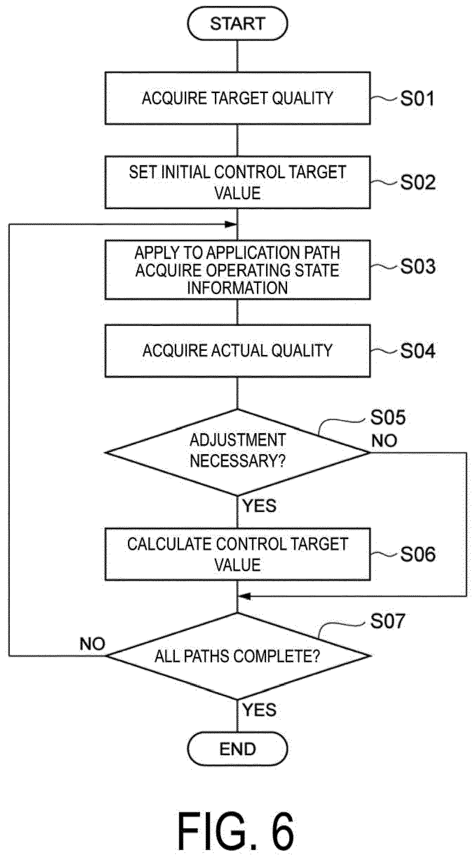

Next, an example of a control method executed using the application system 1 will be described with reference to FIG. 6. FIG. 6 is a flowchart illustrating a control process executed by the control device 100 after the model building unit 128 has built the estimation model.

In this control process, the control device 100 first executes steps S01 and S02. In step S01, for example, the target quality acquisition unit 116 acquires target quality information indicating the target of the application quality. The target quality acquisition unit 116 may acquire the target quality information from information input by an operator via the input device 104. In step S02, for example, the control device 100 sets the control target value for controlling the application device 40 and the articulated robot 10 to an initial value. The control device 100 may store the initial value of the control target value in advance.

Next, the control device 100 executes step S03. In step S03, for example, the operation control unit 112 causes a coating material to be discharged to one application path in accordance with the control target value set to the initial value. In this manner, one bead is formed on the workpiece W. In step S03, while discharge of the coating material to the workpiece W is being executed, the operation information acquisition unit 114 acquires operating state information indicating the state of the operation of the application device 40 and the articulated robot 10 from the application device 40 and the articulated robot 10. The operation information acquisition unit 114 may acquire the operating state information at a predetermined period during the execution of the discharge of the coating material.

Next, the control device 100 executes step S04. In step S04, for example, the quality acquisition unit 118 acquires performance quality information indicating the performance of the application quality of the coating on the workpiece W for the coating applied in step S03 from the detection result obtained by the application state detection unit 90. The quality acquisition unit 118 may acquire the application width BW and the thickness BT of the bead formed in step S03 from image data obtained by capturing an image of an area including the bead formed in step S03 on the workpiece W via the camera 92. The quality acquisition unit 118 may acquire the application width BW and the thickness BT at a plurality of sections of the application path (in the extension direction of the bead).

Next, the control device 100 executes step S05. In step S05, for example, the target value calculation unit 120 determines whether adjustment of the control target value is necessary. For example, the target value calculation unit 120 determines whether the quality deviation level between the performance quality information obtained in step S04 and the target quality information obtained in step S01 exceeds a predetermined level. The target value calculation unit 120 may compare the quality deviation level and the predetermined level for each of the plurality of sections of the application path, or may compare the average value of the performance quality information for the plurality of sections of the application path and the predetermined level.

Instead of the deviation between the performance quality and the target quality, the target value calculation unit 120 may determine whether the operation deviation level between the operating state information obtained in step S03 and the reference value exceeds the set level described above. The target value calculation unit 120 determines that adjustment of the control target value is necessary in a case where the quality deviation level exceeds the predetermined level or in a case where the operation deviation level for any operating state information exceeds the set level. On the other hand, the target value calculation unit 120 determines that adjustment of the control target value is unnecessary in a case where the quality deviation level is equal to or less than the predetermined level or in a case where the operation deviation level for any operating state information is equal to or less than the set level.

In a case where it is determined in step S05 that adjustment of the control target value is necessary (YES in step S05), the control device 100 executes step S06. In step S06, for example, the target value calculation unit 120 uses the estimation model described above to calculate an adjustment width of the control target value on the basis of the current state and the target quality information. This adjustment width corresponds to the amount that, in the current state, the control target value needs to be adjusted to achieve the target quality state. The current state includes the current operating state information obtained in step S03 and the current performance quality information obtained in step S04. The target value calculation unit 120 calculates a new control target value by adding the calculated adjustment width of the control target value to the current control target value (for example, the initial value of the control target value).

On the other hand, in a case where it is determined in step S05 that adjustment of the control target value is unnecessary (NO in step S05), the control device 100 does not execute step S06. Next, the control device 100 executes step S07. In step S07, for example, the control device 100 determines whether the application for all of the application paths (for example, all application paths set for a plurality of workpieces W) is complete.

In step S07, in a case where it is determined that application for all of the application paths is not complete (NO in step S07), then the processing by the control device 100 returns to step S03. In this case, the control device 100 re-executes the processing in steps S03 to S05 (S06). In the application to the next application path in step S03, the operation control unit 112 controls the application device 40 and the articulated robot 10 to discharge the coating material to the application path that is the target for application, according to the control target value calculated after execution of the previous application path. In step S07, in a case where it is determined that application for all of the application paths is complete (YES in step S07), the series of processing by the control device 100 ends.

The series of processing described above is an example and can be changed as appropriate. In the series of processing described above, the control device 100 may execute one step and the next step in parallel, or may execute each of the steps in a different order to that in the example described above. The control device 100 may omit any step or may execute processing in any of the steps different from that in the example described above.

The control device 100 may detect an abnormality in the operation of the application device 40 and the articulated robot 10 in conjunction with the execution of step S05 or at predetermined periods during the execution of step S03. For example, for each of the plurality of operating states included in the operating state information, the abnormality detection unit 124 of the control device 100 detects that an abnormality has occurred in either the application device 40 or the articulated robot 10 in a case where the operation deviation level between the operating state and the reference value exceeds the operation tolerance level described above. The abnormality detection unit 124 may determine that the application device 40 and the articulated robot 10 are operating normally in a case where the operation deviation level is equal to or less than the operation tolerance level.

### Modified Examples

In the example described above, the performance quality information is obtained from the detection result obtained by the application state detection unit 90. However, the performance quality information may be estimated on the basis of the operating state information. The operating state of the articulated robot 10 obtained from the articulated robot 10 and the operating state of the application device 40 obtained from the application device 40 affect the application quality (for example, the application width BW and the thickness BT of the bead) of the coating applied on the workpiece W. Thus, the application quality can be estimated from the operating state information. For example, the control device 100 includes a quality estimation unit 132 as illustrated in FIG. 3. In this case, the application system 1 may not include the application state detection unit 90.

The quality estimation unit 132 estimates the application quality on the basis of the operating state information acquired by the operation information acquisition unit 114. Hereinafter, information indicating the application quality estimated by the quality estimation unit 132 is also referred to as "performance quality information". The target value calculation unit 120 may calculate the control target value on the basis of the operating state information, the target quality information, and the performance quality information estimated by the quality estimation unit 132. For example, the target value calculation unit 120 may determine the adjustment amount of the control target value from the amount of change (output value) of the control target value obtained by inputting the difference between the performance quality information estimated by the quality estimation unit 132 and the target quality information into the estimation model described above.

Even in a case where the control device 100 includes the quality estimation unit 132, the control device 100 may execute a series of processing in a similar order to the flowchart illustrated in FIG. 6. In this case, in step S04, the quality estimation unit 132 may estimate the quality information of the coating applied to the application path on the basis of the operating state information obtained in step S03 (the operating state information obtained during the discharge of the coating material to the application path). When step S06 is executed, the target value calculation unit 120 may calculate (adjust) the control target value using the estimation model based on the difference between the performance quality information estimated in step S04 and the target quality obtained in step S01 and the operating state information obtained in step S03.

The model building unit 128 of the control device 100 may build an estimation model for estimating the performance quality information. The model building unit 128 stores the operating state information and information indicating the application quality based on the operating state information (for example, application quality obtained via a camera or the like). The model building unit 128 builds an estimation model that outputs the performance quality information in response to input of the operating state information on the basis of the accumulated data in which the operating state information and the information indicating the application quality are associated with one another and stored.

Instead of the estimation model for estimating the adjustment amount (amount to be adjusted) of the control target value and the estimation model for estimating the performance quality information from the operating state information, one estimation model may be built. For example, the target value calculation unit 120 may calculate (adjust) the control target value using another estimation model configured to represent a relationship between the current operating state information and the target quality information and the amount of change of the control target value.

The application state detection unit 90 may detect the state of the coating (bead) on the workpiece W using a laser beam instead of the camera. In this case, the quality acquisition unit 118 may acquire the application width BW of the bead or the like from the measurement result obtained from the light receiving state of the laser beam. The application device 40 may include one pump instead of two pumps (the pumps 51a, 51b).

### Effects of the Embodiment

The application system 1 according to the embodiment described above includes the application device 40 configured to discharge the coating material from the discharge unit 41, the articulated robot 10 configured to change the position and the orientation of the discharge unit 41 such that the coating material from the discharge unit 41 is applied to the workpiece W, and the control device 100 configured to control the application device 40 and the articulated robot 10. The control device 100 includes the target value calculation unit 120 configured to calculate the control target value for controlling the application device 40 and the articulated robot 10 on the basis of the operating state information indicating the operating state of at least one of the application device 40 or the articulated robot 10 and the target quality information indicating a target for application quality of the coating to the workpiece W and the operation control unit 112 configured to control the application device 40 and the articulated robot 10 according to the control target value calculated by the target value calculation unit 120.

The control target value for obtaining the target quality changes depending on the operating state of at least one of the application device 40 or the articulated robot 10. In the application system 1, the control target value is calculated on the basis of information indicating the operating state and information indicating the target quality, and thus control is executed on the application device 40 and the articulated robot 10 using a control target value for obtaining a quality that is closer to the target quality. This is useful in that the quality of the coating applied to the workpiece W is stabilized.

In the application system 1 according to the embodiment described above, the target value calculation unit 120 may calculate the control target value further on the basis of the performance quality information indicating performance of the application quality of the coating to the workpiece W. In this case, the control target value can be calculated taking into account the difference between the current coating application quality and the target quality. This is useful in calculating the control target value with high accuracy.

In the application system 1 according to the embodiment described above, the target value calculation unit 120 may calculate the control target value using an estimation model configured to represent a relationship between the control target value, and the target quality information, the performance quality information, and the operating state information. In this case, by using the target quality information, the performance quality information, and the operating state information in the estimation model, the control target value can be easily calculated. This is useful in simplifying the calculations performed by the control device 100.

The application system 1 according to the embodiment described above may further include the quality estimation unit 132 configured to estimate the performance quality information on the basis of the operating state information. The target value calculation unit 120 may calculate the control target value on the basis of the operating state information, the target quality information, and the performance quality information estimated by the quality estimation unit 132. In this case, the control target value can be adjusted without referencing the application result of the coating actually applied to the workpiece W. This is useful in simplifying the operation for adjusting the control target value.

In the application system 1 according to the embodiment described above, the quality estimation unit 132 may estimate the performance quality information based on the operating state information using an estimation model configured to output the performance quality information in response to input of the operating state information. In this case, when estimating the performance quality information, the estimated value of the performance quality information can be obtained by using the operating state information in the estimation model. This is useful in simplifying the calculations performed by the control device 100 when estimating the performance quality information from the operating state information.

The application system 1 according to the embodiment may further include the application state detection unit 90 configured to detect a state of the coating applied to the workpiece W and the quality acquisition unit 118 configured to acquire the performance quality information from a detection result obtained by the application state detection unit 90. The target value calculation unit 120 may calculate the control target value on the basis of the operating state information, the target quality information, and the performance quality information acquired by the quality acquisition unit 118. In this case, information indicating the application quality is obtained from the state of the coating actually applied to the workpiece W, so highly accurate performance quality information is obtained. This is useful in calculating the control target value with high accuracy.

In the application system 1 according to the embodiment described above, the operating state information may include information indicating at least one selected from the group consisting of a flow rate of the coating material in a flow path to the discharge unit 41, a pressure of the coating material in the flow path, a temperature of the coating material in the flow path, an operating state of an open/close valve (the discharge valve 43) provided in the flow path, an operating state of the pumps 51a, 51b configured to pressure-feed the coating material to the discharge unit 41, and an operating state of the actuators 31 to 36 included in the articulated robot 10. This information may vary, or differences may occur between the control target values indicating command values depending on external environmental factors. With the configuration described above, this variation or difference is taken into account when calculating the control target value. This is useful in adjusting the control target value with high accuracy. For example, the amount to adjust the control target value varies depending on the temperature of the coating material in the flow path to the discharge unit 41 (for example, depending on whether the temperature is 25°C or 35°C). In the application system 1 described above, the adjustment amount of the control target value is calculated in consideration of the temperature of the coating material, and thus, the control target value can be adjusted according to the current state of the device.

In the application system 1 according to the embodiment described above, the application quality of the coating to the workpiece W may include at least the application width BW of the coating on the workpiece W or the thickness BT of the coating on the workpiece W. In this case, the application width or thickness of the coating applied on the workpiece W can be brought close to the target value.

The application system 1 according to the embodiment described above may further include the operation information acquisition unit 114 configured to acquire the operating state information from at least the application device 40 or the articulated robot 10 during execution of application of the coating material to the workpiece W. The target value calculation unit 120 may calculate the control target value in a case where the deviation level between the operating state information acquired by the operation information acquisition unit 114 and the reference value exceeds a set level that is predetermined. It is plausible that the difference between the target quality and the performance quality increases when the operating state information deviates from the reference value. With the configuration described above, the control target value is calculated even in a case where the operating state information deviates from the reference value, so the difference between the target quality and the performance quality can be reduced. This is useful in that the quality of the coating applied to the workpiece W is stabilized.

The application system 1 according to the embodiment described above may further include the abnormality detection unit 124 configured to detect an abnormality in the operation of the application device 40 or the articulated robot 10 on the basis of a comparison result of the deviation level and a predetermined tolerance level greater than the set level. In this case, in the adjustment of the control target value, it is possible to detect variation to a degree where the performance quality cannot be brought to the target quality.

### Reference Signs List

1 Application system
10 Articulated robot
31 to 36 Actuator
40 Application device
41 Discharge unit
43 Discharge valve
51a, 51b Pump
90 Application state detection unit
100 Control device
112 Operation control unit
114 Operation information acquisition unit
118 Quality acquisition unit
120 Target value calculation unit
124 Abnormality detection unit
132 Quality estimation unit
W Workpiece
BW Application width
BT Thickness

## Claims

1. An application system (1), comprising:
an application device (40) configured to discharge a coating material from a discharge unit (41);
an articulated robot (10) configured to change a position and an orientation of the discharge unit (41) such that the coating material from the discharge unit (41) is applied to a workpiece (W); and
a control device (100) configured to control the application device (40) and the articulated robot (10), wherein
the control device (100) includes
an operation information acquisition unit (114) configured to acquire operating state information indicating an operating state from at least the application device (40) or the articulated robot (10) during execution of application of the coating to the workpiece (W),
a target value calculation unit (120) configured to calculate a control target value for controlling the application device (40) and the articulated robot (10) on the basis of the operating state information acquired by the operation information acquisition unit (114) and target quality information indicating a target for application quality of coating to the workpiece (W), and
an operation control unit (112) configured to control the application device (40) and the articulated robot (10) according to the control target value calculated by the target value calculation unit (120).

2. The application system (1) according to claim 1, wherein
the target value calculation unit (120) calculates the control target value further on the basis of performance quality information indicating performance of the application quality of the coating to the workpiece (W).

3. The application system (1) according to claim 2, wherein
the target value calculation unit (120) calculates the control target value using an estimation model configured to represent a relationship between the control target value, and the target quality information, the performance quality information, and the operating state information.

4. The application system (1) according to claim 2 or 3, further comprising:
a quality estimation unit (132) configured to estimate the performance quality information on the basis of the operating state information,
wherein the target value calculation unit (120) calculates the control target value on the basis of the operating state information, the target quality information, and the performance quality information estimated by the quality estimation unit (132).

5. The application system (1) according to claim 4, wherein
the quality estimation unit (132) estimates the performance quality information based on the operating state information using an estimation model configured to output the performance quality information in response to input of the operating state information.

6. The application system (1) according to claim 2 or 3, further comprising:
an application state detection unit (90) configured to detect a state of the coating applied to the workpiece (W), and
a quality acquisition unit (118) configured to acquire the performance quality information from a detection result obtained by the application state detection unit (90),
wherein the target value calculation unit (120) calculates the control target value on the basis of the operating state information, the target quality information, and the performance quality information acquired by the quality acquisition unit (118).

7. The application system (1) according to any one of claims 1 to 6, wherein
the operating state information includes information indicating at least one selected from the group consisting of a flow rate of the coating material in a flow path to the discharge unit (41), a pressure of the coating material in the flow path, a temperature of the coating material in the flow path, an operating state of an open/close valve (43) provided in the flow path, an operating state of a pump (51a, 51b) configured to pressure-feed the coating material to the discharge unit (41), and an operating state of an actuator included in the articulated robot (10).

8. The application system (1) according to any one of claims 1 to 7, wherein
the application quality of the coating to the workpiece (W) includes at least an application width (BW) of the coating on the workpiece (W) or a thickness (BT) of the coating on the workpiece (W).

9. The application system (1) according to any one of claims 1 to 8,
wherein the target value calculation unit (120) calculates the control target value in a case where a deviation level between the operating state information acquired by the operation information acquisition unit (114) and a reference value exceeds a set level that is predetermined.

10. The application system (1) according to claim 9, further comprising:
an abnormality detection unit (124) configured to detect an abnormality in operation of the application device (40) or the articulated robot (10) on the basis of a comparison result of the deviation level and a predetermined tolerance level greater than the set level.

11. A control method, comprising:
acquiring operation state information indicating an operating state from at least an application device (40) configured to discharge a coating material from a discharge unit (41) or an articulated robot (10) configured to change a position and an orientation of the discharge unit (41) such that the coating material from the discharge unit (41) is applied to a workpiece (W) during execution of application of the coating to the workpiece (W),
calculating a control target value for controlling the application device (40) and the articulated robot (10) on the basis of the operating state information and target quality information indicating a target for application quality of coating to the workpiece (W); and
controlling the application device (40) and the articulated robot (10) according to the control target value thus calculated.

12. A program for causing a computer to execute the control method according to claim 11.

## Patentansprüche

1. Auftragssystem (1), umfassend:
eine Auftragsvorrichtung (40), die dazu konfiguriert ist, ein Beschichtungsmaterial aus einer Austragseinheit (41) auszutragen;
einen Knickarmroboter (10), der dazu konfiguriert ist, eine Position und eine Ausrichtung der Austragseinheit (41) derart zu ändern, dass das Beschichtungsmaterial aus der Austragseinheit (41) auf ein Werkstück (W) aufgetragen wird; und
eine Steuervorrichtung (100), die dazu konfiguriert ist, die Auftragsvorrichtung (40) und den Knickarmroboter (10) zu steuern, wobei
die Steuervorrichtung (100) beinhaltet
eine Betriebsinformationen-Erhebungseinheit (114), die dazu konfiguriert ist, während Ausführung des Auftragens der Beschichtung auf das Werkstück (W) Betriebszustandsinformationen, die einen Betriebszustand angeben, von mindestens der Auftragsvorrichtung (40) oder dem Knickarmroboter (10) zu erheben,
eine Zielwertberechnungseinheit (120), die dazu konfiguriert ist, einen Steuerzielwert zum Steuern der Auftragsvorrichtung (40) und des Knickarmroboters (10) auf der Basis der von der Betriebsinformationen-Erhebungseinheit (114) erhobenen Betriebszustandsinformationen und von Zielqualitätsinformationen, die ein Ziel für Auftragsqualität der Beschichtung auf das Werkstück (W) angeben, zu berechnen, und
eine Betriebssteuereinheit (112), die dazu konfiguriert ist, die Auftragsvorrichtung (40) und den Knickarmroboter (10) gemäß dem von der Zielwertberechnungseinheit (120) berechneten Steuerzielwert zu steuern.

2. Auftragssystem (1) nach Anspruch 1, wobei
die Zielwertberechnungseinheit (120) den Steuerzielwert weiter auf der Basis von Leistungsqualitätsinformationen, die Leistung der Auftragsqualität der Beschichtung auf dem Werkstück (W) angeben, berechnet.

3. Auftragssystem (1) nach Anspruch 2, wobei
die Zielwertberechnungseinheit (120) den Steuerzielwert unter Verwendung eines Schätzmodells berechnet, das dazu konfiguriert ist, eine Beziehung zwischen dem Steuerzielwert und den Zielqualitätsinformationen, den Leistungsqualitätsinformationen und den Betriebszustandsinformationen darzustellen.

4. Auftragssystem (1) nach Anspruch 2 oder 3, das weiter umfasst:
eine Qualitätsschätzeinheit (132), die dazu konfiguriert ist, die Leistungsqualitätsinformationen auf der Basis der Betriebszustandsinformationen zu schätzen,
wobei die Zielwertberechnungseinheit (120) den Steuerzielwert auf der Basis der Betriebszustandsinformationen, der Zielqualitätsinformationen und der von der Qualitätsschätzeinheit (132) geschätzten Leistungsqualitätsinformationen berechnet.

5. Auftragssystem (1) nach Anspruch 4, wobei
die Qualitätsschätzeinheit (132) die Leistungsqualitätsinformationen auf der Basis der Betriebszustandsinformationen unter Verwendung eines Schätzmodells schätzt, das dazu konfiguriert ist, die Leistungsqualitätsinformationen in Reaktion auf Eingabe der Betriebszustandsinformationen auszugeben.

6. Auftragssystem (1) nach Anspruch 2 oder 3, das weiter umfasst:
eine Auftragszustands-Erfassungseinheit (90), die dazu konfiguriert ist, einen Zustand der Beschichtung, die auf das Werkstück (W) aufgetragen wird, zu erfassen, und
eine Qualitätserhebungseinheit (118), die dazu konfiguriert ist, die Leistungsqualitätsinformationen aus einem Erfassungsergebnis, das von der Auftragszustands-Erfassungseinheit (90) erhalten wird, zu erheben,
wobei die Zielwertberechnungseinheit (120) den Steuerzielwert auf der Basis der Betriebszustandsinformationen, der Zielqualitätsinformationen und der von der Qualitätserhebungseinheit (118) erhobenen Leistungsqualitätsinformationen berechnet.

7. Auftragssystem (1) nach einem der Ansprüche 1 bis 6, wobei
die Betriebszustandsinformationen Informationen beinhalten, die mindestens eines angeben, ausgewählt aus der Gruppe bestehend aus einer Strömungsrate des Beschichtungsmaterials in einem Strömungsweg zur Austragseinheit (41), einem Druck des Beschichtungsmaterials im Strömungsweg, einer Temperatur des Beschichtungsmaterials im Strömungsweg, einem Betriebszustand eines Öffnungs-/Schließventils (43), das im Strömungsweg vorgesehen ist, einem Betriebszustand einer Pumpe (51a, 51b), die dazu konfiguriert ist, das Beschichtungsmaterial unter Druck in die Austragseinheit (41) zu speisen, und einem Betriebszustand einer im Knickarmroboter (10) beinhalteten Betätigungsvorrichtung.

8. Auftragssystem (1) nach einem der Ansprüche 1 bis 7, wobei
die Auftragsqualität der Beschichtung auf das Werkstück (W) mindestens eine Auftragsbreite (BW) der Beschichtung auf dem Werkstück (W) oder eine Dicke (BT) der Beschichtung auf dem Werkstück (W) beinhaltet.

9. Auftragssystem (1) nach einem der Ansprüche 1 bis 8,
wobei die Zielwertberechnungseinheit (120) den Steuerzielwert in einem Fall berechnet, in dem ein Abweichungsniveau zwischen den von der Betriebsinformationen-Erhebungseinheit (114) erhobenen Betriebszustandsinformationen und einem Referenzwert ein eingestelltes Niveau, das vorbestimmt ist, überschreitet.

10. Auftragssystem (1) nach Anspruch 9, das weiter umfasst:
eine Anomalieerfassungseinheit (124), die dazu konfiguriert ist, eine Anomalie im Betrieb der Auftragsvorrichtung (40) oder des Knickarmroboters (10) auf der Basis eines Vergleichsergebnisses des Abweichungsniveaus und eines vorbestimmten Toleranzniveaus, das größer als das eingestellte Niveau ist, zu erfassen.

11. Steuerverfahren, umfassend:
Erheben von Betriebszustandsinformationen, die einen Betriebszustand angeben, von mindestens einer Auftragsvorrichtung (40), die dazu konfiguriert ist, ein Beschichtungsmaterial aus einer Austragseinheit (41) auszutragen, oder einem Knickarmroboter (10), der dazu konfiguriert ist, eine Position und eine Ausrichtung der Austragseinheit (41) derart zu ändern, dass das Beschichtungsmaterial aus der Austragseinheit (41) auf ein Werkstück (W) aufgetragen wird, während Ausführung des Auftragens der Beschichtung auf das Werkstück (W),
Berechnen eines Steuerzielwerts zum Steuern der Auftragsvorrichtung (40) und des Knickarmroboters (10) auf der Basis der Betriebszustandsinformationen und Zielqualitätsinformationen, die ein Ziel für die Auftragsqualität der Beschichtung auf das Werkstück (W) angeben; und
Steuern der Auftragsvorrichtung (40) und des Knickarmroboters (10) gemäß dem so berechneten Steuerzielwert.

12. Programm, um einen Computer dazu zu veranlassen, das Steuerverfahren nach Anspruch 11 auszuführen.

## Revendications

1. Système d'application (1), comprenant :
un dispositif d'application (40) configuré pour décharger un matériau de revêtement à partir d'une unité de décharge (41) ;
un robot articulé (10) configuré pour changer une position et une orientation de l'unité de décharge (41) de telle sorte que le matériau de revêtement provenant de l'unité de décharge (41) soit appliqué à une pièce (W) ; et
un dispositif de commande (100) configuré pour commander le dispositif d'application (40) et le robot articulé (10), dans lequel
le dispositif de commande (100) inclut
une unité d'acquisition d'informations de fonctionnement (114) configurée pour acquérir des informations d'état de fonctionnement indiquant un état de fonctionnement à partir d'au moins le dispositif d'application (40) ou le robot articulé (10) pendant l'exécution de l'application du revêtement à la pièce (W),
une unité de calcul de valeur cible (120) configurée pour calculer une valeur cible de commande pour commander le dispositif d'application (40) et le robot articulé (10) sur la base des informations d'état de fonctionnement acquises par l'unité d'acquisition d'informations de fonctionnement (114) et d'informations de qualité de cible indiquant une cible pour la qualité d'application du revêtement à la pièce (W), et
une unité de commande de fonctionnement (112) configurée pour commander le dispositif d'application (40) et le robot articulé (10) en fonction de la valeur cible de commande calculée par l'unité de calcul de valeur cible (120).

2. Système d'application (1) selon la revendication 1, dans lequel
l'unité de calcul de valeur cible (120) calcule en outre la valeur cible de commande sur la base d'informations de qualité de réalisation indiquant la réalisation de la qualité d'application du revêtement à la pièce (W).

3. Système d'application (1) selon la revendication 2, dans lequel
l'unité de calcul de valeur cible (120) calcule la valeur cible de commande à l'aide d'un modèle d'estimation configuré pour représenter une relation entre la valeur cible de commande et les informations de qualité cible, les informations de qualité de réalisation et les informations d'état de fonctionnement.

4. Système d'application (1) selon la revendication 2 ou 3, comprenant en outre :
une unité d'estimation de qualité (132) configurée pour estimer les informations de qualité de réalisation sur la base des informations d'état de fonctionnement,
dans lequel l'unité de calcul de valeur cible (120) calcule la valeur cible de commande sur la base des informations d'état de fonctionnement, des informations de qualité cible et des informations de qualité de réalisation estimées par l'unité d'estimation de qualité (132).

5. Système d'application (1) selon la revendication 4, dans lequel
l'unité d'estimation de qualité (132) estime les informations de qualité de réalisation sur la base des informations d'état de fonctionnement à l'aide d'un modèle d'estimation configuré pour délivrer les informations de qualité de réalisation en réponse à l'entrée des informations d'état de fonctionnement.

6. Système d'application (1) selon la revendication 2 ou 3, comprenant en outre :
une unité de détection d'état d'application (90) configurée pour détecter un état du revêtement appliqué à la pièce (W), et
une unité d'acquisition de qualité (118) configurée pour acquérir les informations de qualité de réalisation à partir d'un résultat de détection obtenu par l'unité de détection d'état d'application (90),
dans lequel l'unité de calcul de valeur cible (120) calcule la valeur cible de commande sur la base des informations d'état de fonctionnement, des informations de qualité cible et des informations de qualité de réalisation acquises par l'unité d'acquisition de qualité (118).

7. Système d'application (1) selon l'une quelconque des revendications 1 à 6, dans lequel
les informations d'état de fonctionnement incluent des informations indiquant au moins un élément sélectionné dans le groupe consistant en un débit du matériau de revêtement dans un trajet d'écoulement vers l'unité de décharge (41), une pression du matériau de revêtement dans le trajet d'écoulement, une température du matériau de revêtement dans le trajet d'écoulement, un état de fonctionnement d'une soupape ouverte/fermée (43) située dans le trajet d'écoulement, un état de fonctionnement d'une pompe (51a, 51b) configurée pour alimenter sous pression le matériau de revêtement vers l'unité de décharge (41), et un état de fonctionnement d'un actionneur inclus dans le robot articulé (10).

8. Système d'application (1) selon l'une quelconque des revendications 1 à 7, dans lequel
la qualité d'application du revêtement à la pièce (W) inclut au moins une largeur d'application (BW) du revêtement sur la pièce (W) ou une épaisseur (BT) du revêtement sur la pièce (W).

9. Système d'application (1) selon l'une quelconque des revendications 1 à 8,
dans lequel l'unité de calcul de valeur cible (120) calcule la valeur cible de commande dans le cas où un niveau d'écart entre les informations d'état de fonctionnement acquises par l'unité d'acquisition d'informations de fonctionnement (114) et une valeur de référence dépasse un niveau défini qui est prédéterminé.

10. Système d'application (1) selon la revendication 9, comprenant en outre :
une unité de détection d'anomalie (124) configurée pour détecter une anomalie de fonctionnement du dispositif d'application (40) ou du robot articulé (10) sur la base d'un résultat de comparaison du niveau d'écart et d'un niveau de tolérance prédéterminé supérieur au niveau défini.

11. Procédé de commande, comprenant les étapes consistant à :
acquérir des informations d'état de fonctionnement indiquant un état de fonctionnement à partir d'au moins un dispositif d'application (40) configuré pour décharger un matériau de revêtement à partir d'une unité de décharge (41) ou un robot articulé (10) configuré pour changer une position et une orientation de l'unité de décharge (41) de telle sorte que le matériau de revêtement provenant de l'unité de décharge (41) soit appliqué à une pièce (W) pendant l'exécution de l'application du revêtement à la pièce (W),
calculer une valeur cible de commande pour commander le dispositif d'application (40) et le robot articulé (10) sur la base des informations d'état de fonctionnement et d'informations de qualité de cible indiquant une cible pour la qualité d'application du revêtement à la pièce (W) ; et
commander le dispositif d'application (40) et le robot articulé (10) en fonction de la valeur cible de commande ainsi calculée.

12. Programme pour amener un ordinateur à exécuter le procédé de commande selon la revendication 11.
